Europäisches Patentamt

European Patent Office

Office européen des brevets

(11) Publication number: **0 180 727**

A1

# (12) EUROPEAN PATENT APPLICATION

(21) Application number: **85110482.8**

(22) Date of filing: **21.08.85**

(51) Int. Cl.⁴: **A21D 8/02** , A21C 1/00

(30) Priority: **05.11.84 US 668317**

(43) Date of publication of application:
**14.05.86 Bulletin 86/20**

(84) Designated Contracting States:
**AT BE CH DE FR GB IT LI LU NL SE**

(71) Applicant: **ROGERS GROUP, INC.**
**421 Great Circle Drive**
**Nashville, Tenn. 37202(US)**

(72) Inventor: **Lynn, Charles C.**
**5932 Ridgeville**
**Ohio 44039(US)**

(74) Representative: **Schöning, Hans-Werner, Dipl.-Ing.**
**Adenauerallee 28 (Postfach 102 905)**
**D-2000 Hamburg 1(DE)**

(54) **Fermentation system and use thereof.**

(57) The invention relates to a method and apparatus for manufacturing a bakery product from a flour yeast dough mixture. The process including the steps of mixing together a predetermined amount of water, yeast, and ferment concentrate to form a slurry. A predetermined amount of flour and a second predetermined amount of water are blended with the slurry to form a mixture. The mixture is fermented for a predetermined period of time. A third predetermined amount of water and a second predetermined amount of flour are introduced into said mixture and blended together to form a second mixture. The second mixture is fermented for a second predetermined period of time. A final predetermined amount of water is introduced to said second fermented mixture such that the second fermented mixture and water are mixed together. A final predetermined amount of flour is added to the second fermented mixture and the final predetermined amount of water to form a dough product for baking.

FIG. 1

## BACKGROUND OF THE INVENTION

This invention is directed to a new fermentation system that reduces the fermentation time necessary to produce bakery products without corresponding reductions in the quality of the bakery products.

The baking industry has been faced with the problems of rapidly increasing manufacturing costs associated with the steadily rising costs of labor, energy, raw materials, real estate and other such factors. To combat these increasing costs, the baking industry began to look for increased productivity. The baking industry, and the yeast-raised product industry in particular, found that a logical place to decrease manufacturing costs was in the most time-consuming element, namely the required fermentation time of the bakery product dough. Various methods were developed to speed-up fermentation by means of various chemical and physical inducements. In the early stages of such developments, the industry found no apparent problems associated with the reduction of fermentation time. However, as the trend to cut required fermentation time continued, the industry has continued to face increasing new problems, including adverse and undesirable effects on the quality of the bakery products. Bread rolls, buns and other bakery products started having decreasing amounts of flavour and aroma along with the gradual loss of other such desirable characteristics as texture and aesthetic appeal.

Previously, it was believed that the function of fermentation was merely related to the gas production in the dough, which would cause the dough to rise and expand. However, extensive investigation into the subject has established that several relevant processes occur during fermentation. Along with the gas production, there is the production of chemically identifiable substances such as organic acids, ketones and aldehydes which are products of the fermentation process itself. The industry has learned that the only function effectively speeded up in a hastened fermentation is the gas production. The other relevant processes and substances have little or no time to be produced during a fast fermentation system. As such, those processes and substances are either missing or undesirably low in such doughs. These substances have been found to give flavor and aroma to the product and also cause the various chemical and physical interactions required for a good yeast raised system. Therefore, any compromise in the fermentation system will result, in various degrees, in a sacrifice of flavor, aroma, texture and other desirable characteristics. The bakery industry and the flavor companies and other food ingredient companies began developing compensating material to replace the sacrificed characteristics, some through flavor chemistry, others through enzyme related materials. A few of these compensating materials have helped to partially overcome the blandness of these fast fermentation bakery products, but none of the compensating materials has really created or replaced the genuine flavor and other qualities that result from a good fermentation system. Therefore, the current remedies or compensating materials have not offered much improvement and the baking industry is still addressing the quality deterioration problem associated with shorter fermentation systems and the resultant dropping per capita consumption of bakery products.

Technology utilizing concentrated dry fermentation products offers a significant breakthrough in solving many of the problems associated with short fermentation systems. First, and most importantly, the resulting end products such as breads, buns, and sweet goods bakery products meet the highest standards and are comparable to goods normally obtainable only through the long fermentation method.

One widely accepted method to produce high-quality products is the sponge and dough, or batch process method which results in the high-quality flavor, aroma, and texture due to a long fermentation stage and the associated chemical substances produced therefrom. However, the sponge and dough process is also the most costly method due to the requirements of double mixing, approximately four hours fermentation time, and extra handling, all of which require more labor, space, energy, and time. The sponge and dough method is also intolerant of disruptions in the production process of even short durations thus resulting in higher waste if the process is interrupted.

Other methods of production include the flour prefermented method which normally contains about 50% flour and which produces good quality products. However, there is some sacrifice of desirable characteristics when compared to the sponge and dough method. The flour pre-ferment systems, due to the high flour content, require heavy-duty equipment, large pumps to handle the viscosity of the high flour content pre-ferment product, and high energy consumption for cooling of the flour pre-ferment product. In addition, frequent maintenance problems occur in the heat exchange and process flow equipment used in the flour pre-ferment system.

Another production method, the water pre-ferment method, contains no flour, yet offers good yeast distribution. However, the water pre-ferment systems require considerable amounts of water and sugar and produce below average quality bakery goods. In addition, such systems are very sensitive at the yeast saturation point and therefore require monitoring during the pre-ferment process in order to maintain bakery product consistency.

Still another method, the no-time dough method is very simple and requires no pre-ferment of the dough. However, the no-time dough systems produce lower quality goods that sacrifice flavor, aroma and shelf life keeping qualities in exchange for the lower production costs associated with the no-time dough systems.

Finally, the continuous mixing method are convenient and cost efficient for the baking industry. However, the continuous mixing system produce the least desirable quality bakery products in terms of flavor, aroma, texture, and keeping qualities.

The baking industry has a new technology which utilizes an active dry ferment concentrate which greatly improves upon the pre-ferment methods described above. The active dry ferment concentrate provides the necessary elements that enable the baker in the bakery industry to produce, through fast fermentation methods, end bakery products that display all of the desirable characteristics normally achievable only through the long fermentation methods. The active dry ferment concentrate attains quality bakery products that are equal to the sponge and dough methods while saving the time normally only associated with the no-time dough methods.

While the active dry ferment concentrate offers the opportunity to attain quality bakery products while saving fermentation time, problems are still present which prevent the active dry ferment concentrate from being utilized to its greatest potential.

The present invention provides a reliable and efficient fermentation method and apparatus that utilizes the active dry ferment concentrate and provides a quality bakery product without loss of the desirable characteristics normally achievable only through the long fermentation methods.

## SUMMARY OF THE INVENTION

The invention relates to a fermentation apparatus and a process which uses an active dry ferment concentrate and enables the bakery industry to achieve quality bakery goods equal in quality to the sponge and dough bakery goods, while producing economic timesaving normally associated with a no-time dough method. The present invention provides a practical and efficient method suitable for use in a majority of bakery operations.

The apparatus and methodology of the present invention provide a system which is only about one quarter of the size of current state-of-the-art flour pre-ferment systems. Current state-of-the-art flour pre-ferment systems, which achieve good bakery product results, require that 50% of the total flour to be used during the bakery process be added during the pre-fermenting process. The fermentation times required by the flour pre-ferment method are approximately 2 to 2 1/2 hours. By comparison, the present invention reaches optimal performance while using approximately 25% of the total flour necessary to produce the bakery product and the fermentation cycle is approximately 1 hour.

The apparatus and methodology of the present invention further provides increased uniformity, reproducibility, and quality control in the bakery products. The present invention provides a completely automatic and easily controllable fermentation system and method of use. The fermentation system is adaptable to microprocessor or microcomputer controls. After a desired time-temperature relationship has been established in a chosen fermentation system for a particular bakery, the variation in time to reach the desired pH or yeast saturation point is nominal, and the tolerance to variations in pH or yeast saturation is far greater than in other known fermentation systems.

The present invention further provides a single, simplified system that can replace any other pre-fermentation system or combination of systems. By changing the proportions of the bakery product ingredients, along with minor procedural changes, the baker can better control the end results and produce bakery products having a full range of quality. Equipment size and time requirements of the present invention are about half as much as current state-of-the-art systems. The reduction in size and time requirements result in a much smaller liquid ferment system which produces the same quantity of finished bakery products. The initial pre-ferment product produced by the method of the present invention has a low viscosity and therefore requires smaller pumps. In addition, the shorter time and greater tolerances of the pre-ferment product of the present invention requires smaller holding systems than are required by the current state of the art fermentation systems.

The apparatus and methodology of the present invention provide a much smaller system than other pre-ferment systems and all mechanical parts are thus proportionally smaller. This results in a significant energy and labor savings. The pre-fermentation materials handled during the fermentation process of the present invention are lower in viscosity, thus requiring mechanical parts that are lighter and simpler in design. The present invention eliminates double mixing required by the sponge method, reduces the container number and size requirements present in conventional brewing system processes, and thereby reduces the amount of floor space required. In addition, the present invention eliminates multiple transfers of the pre-fermentation product which are required by most conventional prefermentation systems. The production cycle using the present invention requires no more time than the no time dough methods yet the quality of bakery goods produced according to the method of the present invention is not compromised in any way. Thus, better overall plant utilization is attained.

The preferred apparatus of the present invention includes an ingrediator system containing an agitator which blends the dry ferment concentrate, water and yeast to form a slurry. The slurry is pumped to the fermentor system which includes a fermentor tank having an impeller which blends the slurry with a desired quantity of flour and water. The impeller thoroughly mixes the slurry, the water and flour for approximately two minutes to form a pre-ferment mixture; then all agitation is stopped. The pre-ferment mixture is allowed to ferment for approximately 30 minutes. After 30 minutes, additional flour is added to the mixture and blended by the impeller for approximately 2 minutes. After an additional 30 minutes, the fermentation cycle has been completed. At this point, the mixture contains approximately 30% of the water required as calculated from the total flour needed for the final dough product. If the absorption of water into the flour within the mixture is at least 60%, the equivalent of 10-15% cold or chilled water is added to the mixture. The temperature of the fermented mixture drops from approximately 80°F to approximately 70°F and has a viscosity of approximately 1,500 cps. The fermented mixture is pumped easily and quickly through a heat exchanger where heat is transferred from the fermented mixture so that the fermented mixture achieves the desired temperature of 45-55°F. The fermented mixture passes from the heat exchanger tank having a slow-sweep agitator. The holding tank is insulated and needs no refrigeration since the fermented mixture will normally be held in the holding tank about 1 1/2 hours.

The potential detrimental affect of any temperature change on the mixture that can occur within the holding period is nominal. However, if a longer holding period should become necessary, due to unexpected interruptions in the bakery operation, a temperature sensor located in the holding tank will activate a recirculation process. The recirculation process entails pumping the fermented mixture from the holding tank back through the heat exchanger to again lower the temperature to the desired 45-55°F range and return the cooled fermented mixture back to the holding tank. This holding procedure can be automatically repeated as necessary until production of the bakery products can be resumed. The fermented mixture can be stored in the holding tank for at least 48 hours. If it is known that the fermented mixture will be stored for at least 5 to 6 hours, the fermented mixture can be cooled to the heat exchanger through a temperature in the 40-45°F range.

The method and apparatus of the present invention is simple to use, and with the use of an active dry ferment concentrate, the system has unusually high tolerances and required no monitoring. Further, no refrigeration is required in the system of the present invention other than the cooling of the fermented mixture by the heat exchanger. The system of the present invention is totally controllable through time and temperature relationships which are in turn controlled by a microcomputer.

Other advantages and features of the invention will be apparent from the following description and drawings relating the preferred embodiment.

## BRIEF DESCRIPTION OF THE DRAWINGS

Fig. 1 is a diagramatic flowchart of the fermentation system of the present invention;

Fig. 2 is a perspective view, partially cutaway, of the fermentation system of the present invention; and

Fig. 3 is a diagramatic flowchart of an alternative embodiment of the fermentation system of the present invention.

## DESCRIPTION OF THE PREFERRED EMBODIMENT

The fermentation system 10 generally includes a control station 12, an ingrediator system 20, a fermentor system 30, a heat exchanger 60, and a holding tank system 70. A water heater 14 is operately connected to the fermentation system 10. The control station 12 generally includes controls and instrument panels necessary to operate the fermentation system 10. The controls and instrument panels of the control station 12 are operatively connected to the ingrediator system 20, the fermentor system 30, the holding tank system 70, the heat exchanger 60 and the water heater 14 in a conventional manner and these connections are not shown or described in detail. The control station 12 of the preferred embodiment includes micro processors which control the operations of the fermentation system 10.

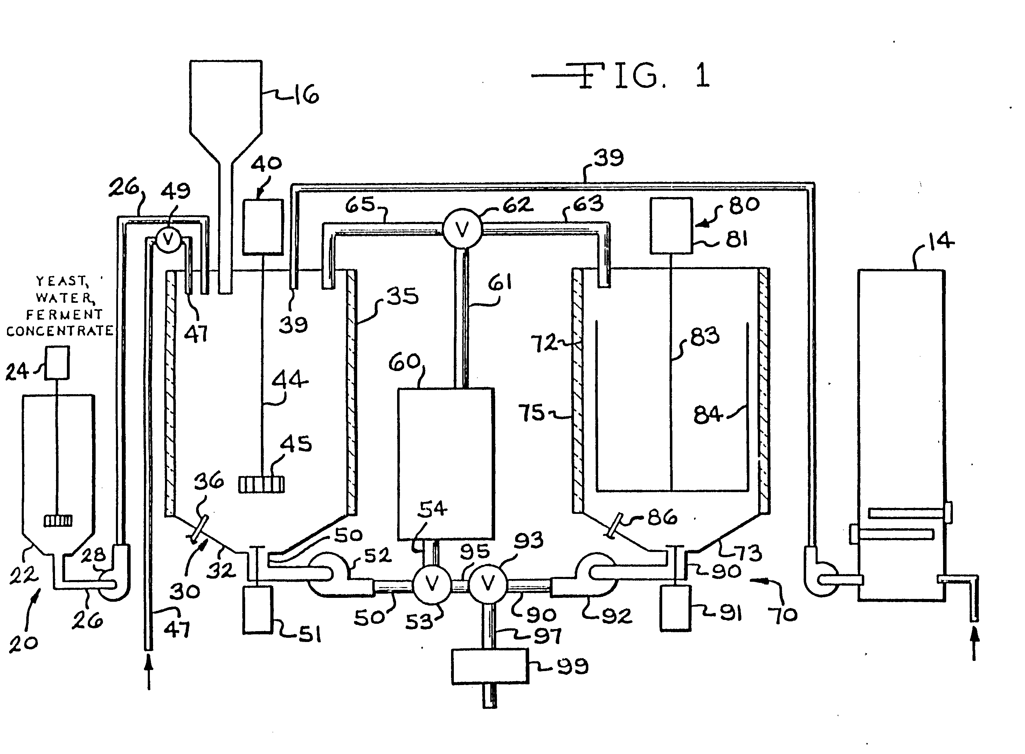

Referring now to Fig. 1, a generalized diagramatic flowchart is shown, illustrating a combination of elements arranged to ferment a pre-ferment product in the fermentation system of the present invention. In this embodiment, and for the purposes of the following description of the preferred embodiment, raised yeast doughs are being fermented.

The fermentation system 10 includes the ingrediator system 20 having an ingrediator tank 22, an agitator means 24, and an outlet pipe 26 operatively connected to a pump 28. Ingredients for preparing a pre-ferment slurry, namely water, yeast and ferment concentrate, are added to the ingrediator tank 22. The agitator means 24 blends the ingredients together such that a pre-ferment slurry is formed. The pre-ferment slurry is pumped from the ingrediator tank 22 through the outlet pipe 26 by the pump 28 to the fermentor system 30.

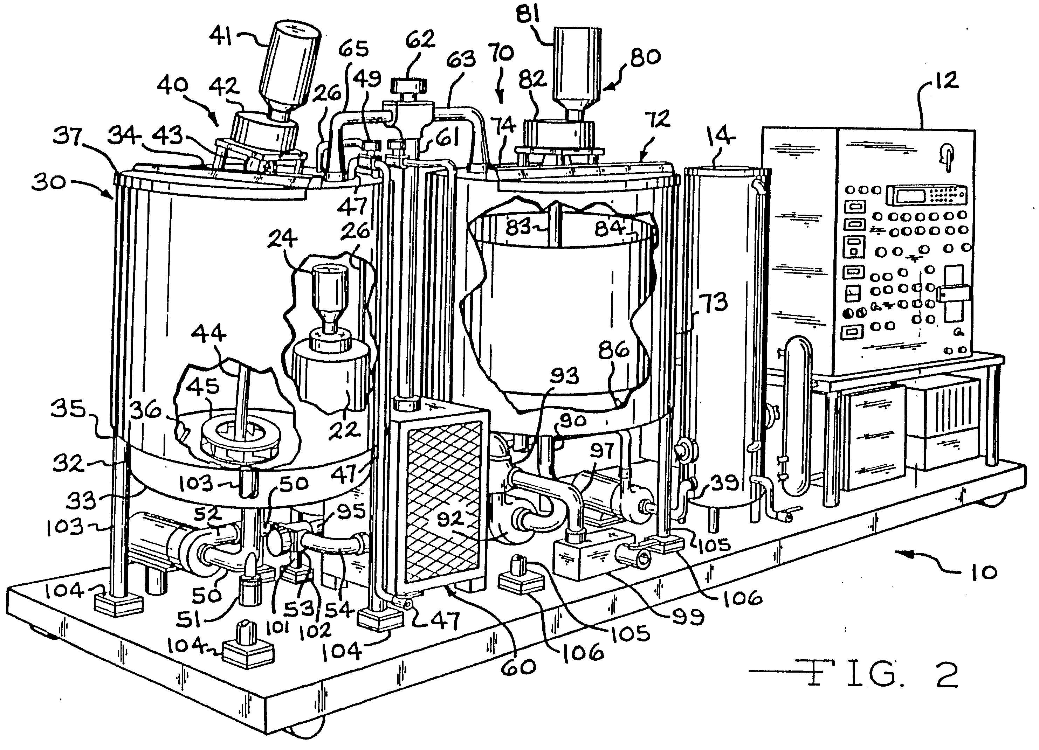

Referring now to Fig. 2, the fermentor system 30 of the present invention includes a fermentor tank 32 with a bottom 33, a top cover 34, and a temperature sensing means 36. The temperature sensing means 36 is operatively connected to the control station 12. An insulation jacket 35 can be placed around the fermentor tank 32 to provide insulation for the pre-ferment slurry. The top cover 34 includes a hinged lid 37. The fermentor system 30 further includes an impeller 40 having a motor 41 which activates a gearbox 42 and a coupling 43 to rotate and aim a shaft 44. An impeller blade 45 is operatively attached to the distal end of the shaft 44 such that when the shaft 44 is rotated about an axis through the shaft 44, the impeller blade 45 is rotated. Flour is supplied to the fermentor tank from a flour hopper 16 in a conventional manner. Warm water is supplied from the water heater 14 through piping 39 to the fermentor tank 32. The pre-ferment slurry, flour and water are blended together by rotation of the impeller means 40 for approximately 2 minutes. The pre-ferment slurry, flour, and water mixture is then allowed to ferment for a critical time period. In the preferred fermentation process, the mixture is allowed to ferment for approximately 25 minutes.

After the first fermentation period, additional flour and additional warm water are added to the mixture in the fermentor tank 32. The mixture is then blended together by rotation of the impeller means 40 for approximately 2 minutes. The blended mixture is then allowed to ferment for a critical time period. In the preferred fermentation process, the blended mixture is allowed to ferment for approximately 35 minutes. In the preferred embodiment the mixture contains approximately 30% water, based on the total flour required by the final dough product. After the second fermentation period, cold water is introduced through a piping 47 into the fermentor tank 32. The piping 47 penetrates the top cover 34 of the fermentor tank 32. The piping 47 is operatively connected to control valve 49. The valve 49 is operatively connected to the control station 12 such that the amount of cold water being supplied to the blended mixture in the fermentor tank 32 is accurately regulated. The cold water and the fermented mixture are blended together by rotation of the impeller 40.

The fermentor system 30 further includes an outlet pipe 50 located proximate the tank bottom 33. The outlet pipe 50 penetrates the bottom 33. The outlet pipe 50 is operatively connected to a pneumatic valve 51 and a pump 52. The pneumatic valve 51 and pump 52 are operatively connected to the control station 12. After the fermented mixture has been blended together with the cold water, the pneumatic valve 51 is activated such that the fermented mixture is pumped from the fermentor tank 32 through the outlet pipe 50 by the pump 52. The outlet pipe 50 is operatively connected to a three-way valve 53, which is operatively connected to the control station 12. The valve 53 directs the flow of the fermented mixture to an inlet pipe 54. The inlet pipe 54 is operatively connected to the heat exchanger 60 where heat is transferred from the fermented mixture.

In the preferred fermentation process, the fermented mixture is pumped from the fermentor system 30 through the heat exchanger 60. The fermented mixture is cooled by the heat exchanger 60 to a desired temperature. The cooled fermented mixture flows out of the heat exchanger 60 through an outlet pipe 61. The outlet pipe 61 is operatively connected to a valve 62. The valve 62 directs the cooled fermented mixture to an inlet pipe 63. The inlet pipe 63 is operatively connected to the holding tank system 70.

The holding tank system 70 of the present invention includes a holding tank 72 having a bottom 73 and a top cover 74. An insulation jacket 75 can be placed around the holding tank 72 to provide insulation for the cooled fermented mixture. The cooled, fermented mixture flows from the heat exchanger 60, through the outlet pipe 61, valve 62 and inlet pipe 63 into the holding tank 72. The holding tank system 70 further includes an agitator 80 having an agitator motor 81 which activates a gearbox 82 to rotate a shaft 83. A slow-sweep agitator means 84 is operatively attached to the shaft 83 such that when the shaft 83 is rotated about at axis through the shaft 83, the slow-sweep agitator 84 is rotated. The rotation of the slow-sweep agitator 84 acts to prevent the cooled fermented mixture from separating and prevents the deposit of sediment on the bottom of the tank.

The holding tank system 70 further includes a temperature sensor 86 to monitor the temperature of the cooled fermented mixture. The temperature sensor 86 is operatively connected to the control station 12 in such a manner that if the temperature of the cooled fermented mixture rises above a certain predetermined temperature the fermented mixture is recycled through the heat exchanger 60 until the desired temperature is reached again. The holding tank system 70 further includes an outlet pipe 90 located proximate the holding tank bottom 73. The outlet pipe 90 penetrates the bottom 73. The outlet pipe 90 is operatively connected to a pneumatic valve 91 and a pump 92, which are operatively connected to the control station 12. The fermented mixture is pumped from the holding tank 72 through the outlet pipe 90 by the pump 92. The fermented mixture is pumped through a three-way valve 93 located at the distal end of the outlet pipe 90. The three-way valve 93 is operatively connected to a connecting pipe 95. The connecting pipe 95 is operatively connected to the three-way valve 53 adjacent the heat exchanger 60. The fermented mixture is forced by the pump 92 through the valve 93, the connecting pipe 95 and the valve 53. The valve 53 is automatically adjusted by the control station 12 such that the fermented mixture is pumped through the valve 53 through the heat exchanger inlet pipe 54. The fermented mixture is then passed through the heat exchanger 60 where the fermented mixture is cooled back to a desired temperature. The three-way valve 62 is automatically adjusted by the control station 12 such that the cooled fermented mixture is forced through the holding tank inlet pipe 63 into the holding tank 72. The holding tank system 70 can therefore operate in a cyclic manner.

At the appropriate time for preparing the dough for the bakery goods, the control station 12 automatically activates the holding tank pneumatic valve 91 and the pump 92. The cooled fermented mixture is pumped from the holding tank 72 through the outlet pipe 90. The control station 12 also automatically activates the three-way valve 93 such that the fermented mixture is prevented from flowing into the connecting pipe 95. As seen in Fig. 1, the three-way valve 93 is further connected to a supply pipe 97. The control station 12 activates the three-way valve 93 such that the fermented mixture is pumped by the pump 92 from the outlet pipe 90 through the three-way valve 93 and into the supply pipe 97. The supply pipe 97 can be operatively connected to a flow meter 99. The flow meter 99 indicates the amount of fermented mixture passing through the supply pipe 97. The supply pipe 97 is operatively connected to a conventional dough mixture such that the fermented mixture exits the supply pipe 97 into the mixer. The fermented mixture is then blended with additional flour and other optional ingredients to form the final dough product.

In operation, the active dry ferment concentrate, yeast and water are added to the ingrediator system 20, blended together, and then pumped through outlet pipe 26 by the pump 28 into the fermentor system 30. A predetermined amount of warm water is supplied from the water heater 14 through the warm water pipe 39 to the fermentor system 30. In addition, a predetermined amount of flour is added from the flour hopper 16 to the fermentor system 30. The slurry, warm water, and flour are blended together for a period of approximately two minutes. The mixture is then allowed to ferment for a predetermined time. In the preferred process, the mixture is fermented for approximately 20-30 minutes. After the initial fermentation cycle has been completed, additional warm water is supplied from the water heater 14 through piping 39 to the fermentor system 30 and a predetermined amount of additional flour is added from the flour hopper 16 to the fermentor system 30. The mixture is blended for approximately two minutes. The mixture is then allowed to ferment for an additional fermentation cycle. In the preferred process, the mixture is fermented for approximately 30-40 minutes.

At the end of the second fermentation cycle, the the fermented mixture is pumped from the fermentor system 30 through the heat exchanger 60. The fermented mixture is cooled by the heat exchanger 60 to a desired temperature. In the preferred process, the mixture is cooled to a temperature between 40-50°F. The cooled fermented mixture exits the heat exchanger 60 and flows into the holding tank system 70. The cooled fermented mixture can remain in the holding tank for 5-6 hours at the 45-50°F temperature. If it is necessary to hold the fermented mixture for a longer period of time, the fermented mixture is pumped from the holding tank system 70 through the heat exchanger 60. The fermented mixture is passed through the heat exchanger 60 such that the fermented mixture is again cooled to an optimal temperature between 38-42°F. The cooled fermented mixture then passes from the heat exchanger 60 back into the holding system 70. The cooled fermented mixture can then be stored in the holding tank system 70 for an additional holding or waiting period before being ultimately used to prepare the final dough product. This cooling cycle can be repeated as many times as necessary.

In the preferred embodiment, the fermented mixture is passed through the heat exchanger 60 and into the holding tank system 70. It is preferable to cool the fermented mixture before supplying the fermented mixture to the dough mixer since the process of mixing the fermented mixture with the additional flour necessary to form the dough product heats up the ingredients to an undesirable temperature. However, in an alternative pre-fermentation process of the present invention, the fermented mixture may be pumped directly from the fermentor tank 32 by the pump 52 through outlet pipe 50. The control station 12 automatically activates the three-way valve 53 and the three-way valve 93 such that an open path is provided for the fermented mixture. The fermented mixture is pumped from the fermentor tank 32, through the outlet pipe 50, the connecting pipe 95, and supply pipe 97 to a conventional dough mixer. The fermented mixture is then blended with additional ingredients to form the final dough product.

In the preferred embodiment, the ingrediator system 20; the fermentor system and the holding tank system 70 are operatively mounted on load bearing cells. Thus, as seen in Fig. 1, the ingrediator system 20 is operatively mounted on a plurality of legs 101. Each leg 101 is operatively attached to a load bearing cell 102. The fermentor tank system 130 is operatively mounted on a plurality of legs 103 which are each operatively connected to a load bearing cell 104. In a like manner, the holding tank system 70 is operatively mounted on a plurality of legs 105 which are each connected to a load bearing cell 106. Each tank itself becomes a scaling device such that there is no need to meter the supply of warm or cold water, or monitor the proper amount of flour to the various tanks.

In addition, yeast nutrients such as ammonium sulfate may be added to the slurry formed in the ingrediator system. Also, other incidental ingredients which may be desirable for the particular recipe of process being produced may be added to the slurry formed in the ingrediator system.

The process of the present invention may alternatively proceed as follows: a first batch or supply of slurry is prepared in the ingrediator system 20 and supplied to the fermentor system 30. The fermented mixture is produced in the fermentor system 30, cooled by the heat exchanger 60 and held in the holding tank system 70. While the first batch is being held in the holding tank system 70, a second batch of slurry is prepared in the ingrediator means 20 and supplied to the fermentor system 30. The first and second fermentation cycles proceed as described above. After the completion of the second fermentation cycle, the second batch is cooled by the heat exchanger 60. If the first batch being held in the holding tank 72 has not been depleted, the second batch may be processed through the heat exchanger 60 and supplied to the holding tank 72 on top of the first batch already contained in the holding tank 72. In addition, if the holding tank system 70 still contains a large quantity of the first produced batch, the second fermented batch may be cooled by the heat exchanger 60 and passed through the three-way valve 62 and through an outlet pipe 65. The second cooled batch may then be returned to the fermentor tank 32. Thus, for a short time, the fermentor tank 32 can act as a "holding tank" until the first batch contained in the holding tank 72 is depleted.

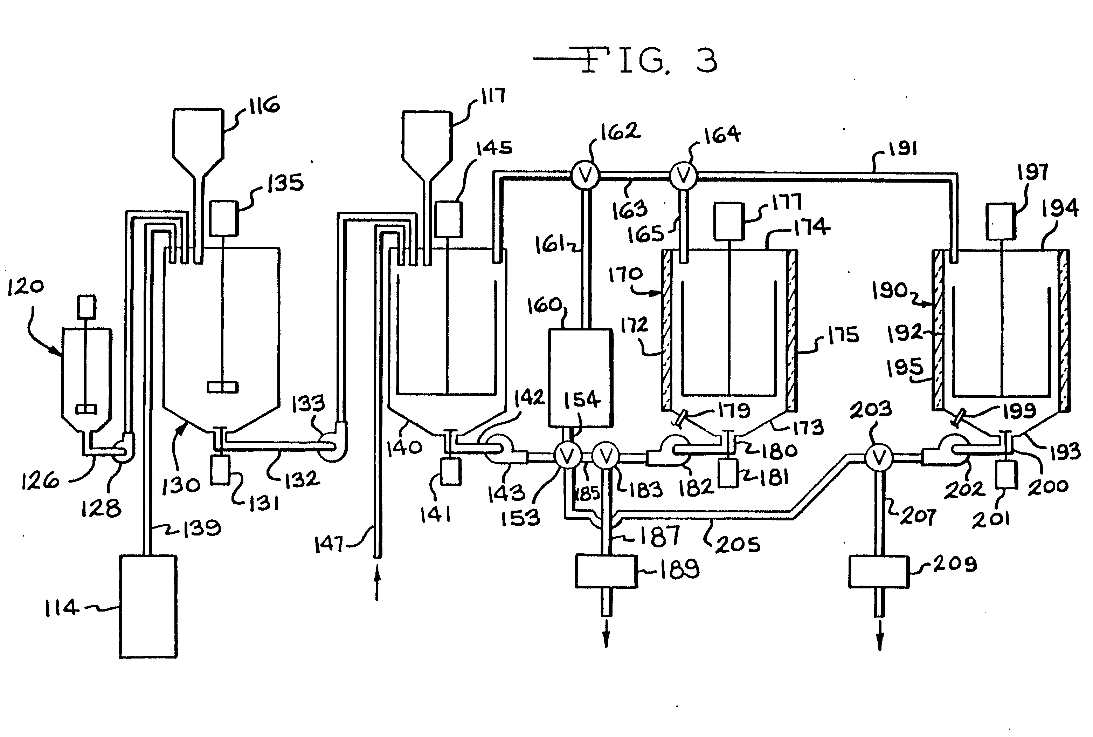

An alternative embodiment of the invention is shown in the Fig. 3. Water, yeast and the ferment concentrate are added to the ingrediator system 120 and blended together to form a slurry. The ingrediator system 120 is essentially the same as described above. The slurry is pumped from the ingrediator system 120 through outlet pipe 126 by the pump 128 into a first fermentor tank system 130. Warm water is supplied from the water heater 114 through the piping 139 into the first fermentor tank 130. A predetermined amount of flour is added from the flour hopper 116 into the fermentor tank 130. The slurry, hot water and flour are then blended together by an impeller 135. The mixture is allowed to ferment for approximately 25 minutes. After the first fermentation cycle is completed, a predetermined amount of additional warm water is supplied through the pipe 139 from the heater 114 to the fermented mixture in the fermentor tank 130. The additional warm water dilutes the fermented mixture. The impeller 135 then mixes together the fermented mixture and the additional warm water. A pneumatic valve 131, operatively connected to the fermentor tank 130, is activated by the control station 12 such that the diluted fermented mixture is pumped from the first fermentor tank 130 through an outlet pipe 132 by a pump 155 and into a second fermentor tank 140. A predetermined amount of additional flour is supplied from the flour hopper 117 into the second fermentor tank 140. The second fermentor tank 140 also includes an impeller 145. The diluted fermented mixture and the additional flour are blended together by the impeller 145. The mixture is then allowed to ferment in a second fermentation cycle for approximately 35 minutes. At the completion of the second fermentation cycle, a predetermined amount of cold water is added through cold water pipe supply 147 to the fermented mixture in the second fermentor tank 140. The second fermentor tank 140 further includes a pneumatic valve 141 located adjacent the bottom of the second fermentor tank 162. An outlet pipe 142 penetrates the fermentor tank 140. The outlet pipe 142 is operatively connected to a pump 143. The outlet pipe 143 is operatively connected to a valve 153. The valve 153 is operatively connected to an inlet pipe 154. The inlet pipe 154 is operatively connected to a heat exchanger 160. The fermented mixture is pumped by the pump 143 from the second fermentor tank 140 through the outlet pipe 142, the valve 153 and the inlet pipe 154 into the heat exchanger 160. The fermented mixture is then cooled through the heat exchanger 160.

The cooled fermented mixture flows out of the heat exchanger 160 through an outlet pipe 161. The outlet pipe 161 is operatively connected to a valve 162 which is operatively controlled by the control station 12. The valve 162 directs the cooled fermented mixture to an inlet pipe 163. The inlet pipe 163 is operatively connected to a valve 164. The valve 164 is operatively connects the connecting pipe 163 with an inlet pipe 165. The inlet pipe 165 is operatively connected to a first holding tank system 170. The holding tank system 170 includes a holding tank 172 having a bottom 173 and a top cover 174. An insulation jacket 175 can be placed around the holding tank 172 to provide insulation for the cooled fermented mixture. The cooled fermented mixture flows from the heat exchanger 160 through the outlet pipe 161, the valve 162, the connecting pipe 163, the valve 164 and the inlet pipe 165 into the holding tank 172. The holding tank system 170 includes an agitator 177 which acts to prevent the cooled fermented mixture from separating and prevents the deposit of sediment on the bottom of the tank.

The holding tank system 170 further includes a temperature sensor 179 to monitor the temperature of the cooled fermented mixture. The temperature sensor 179 is operatively connected to the control station 12 in such a manner that if the temperature of the cooled fermented mixture rises above a certain predetermined temperature, the fermented mixture is removed from the holding tank 172 and cycled through the heat exchanger 170. The holding tank system further includes an outlet pipe 180 located proximate the bottom 173. The outlet pipe 180 penetrates the bottom 173. The outlet pipe 180 is operatively connected to a pneumatic valve 181 and a pump 182. The fermented mixture is pumped from the holding tank 170 through the outlet pipe 180 by the pump 182. The fermented mixture is pumped through a three-way valve 183 located at the distal end of the outlet pipe 180. The three way valve 183 is operatively connected to a connecting pipe 185. The connecting pipe 185 is operatively connected to the valve 153 adjacent the heat exchanger 160. The fermented mixture is forced by the pump 182 through the valve 183, the connecting pipe 185 and the valve 153. The valve 153 is automatically adjusted by the control station 112 such that the fermented mixture is pumped through the valve 153 to the heat exchanger inlet pipe 154. The fermented mixture is then passed through the heat exchanger 160 where the fermented mixture is cooled to a desired temperature. Once the fermented mixture is cooled to the optimum holding temperature range, the cooled fermented mixture is pumped through the outlet pipe 161. The cooled fermented mixture then passes through the valve 162, the connected pipe 163, the valve 164, the inlet pipe 165, and return to the holding tank 172. The first holding tank system 170 can therefore operate in a cyclic manner.

At the appropriate time for preparing dough for the bakery goods, the control station 112 automatically activates the holding tank pneumatic valve 181 and the pump 182. The cooled fermented mixture is pumped from the holding tank 172 through the outlet pipe 180. The control station 112 automatically activates the valve 183 such that the fermented mixture is prevented from flowing into the connecting pipe 185. The control station 112 activates the valve 183 such that the fermented mixture is pumped by the pump 182 from the outlet pipe 180 through the valve 193 and into a supply pipe 187. The supply pipe 187 may be operatively connected to a flow meter 189 which indicates the amount of fermented mixture passing through the supply pipe 187. The supply pipe 187 is operatively connected to a conventional dough mixer such that the fermented mixture axits the supply pipe 187 into the mixer. The fermented mixture is then blended with additional flour and other optional ingredients to form a final dough product.

An additional batch of fermented mixture may be produced while the first batch is being held in the first holding tank system 170. The second supply or batch of fermented mixture is processed through the ingrediator system 120, the first fermentor tank 130, the second fermentor tank 140, and the heat exchanger 160. The cooled fermented second batch mixture exits the heat exchanger 160 through the outlet pipe 161, the valve 162, the connecting pipe 163 and the valve 164. The valve 164 is automatically controled by the control station 112 such that the cooled fermented second batch flows through an inlet pipe 191. The inlet pipe 191 is operatively connected to the second holding tank system 190. The second holding tank 190 includes a holding tank 192 having a bottom 193 and a top cover 194. An insulation jacket 195 can be placed around the holding tank 192 to provide insulation for the cooled fermented mixture. The holding tank system 190 further includes an agitator 197 which acts to prevent the cooled fermented mixture from separating into its component ingredients. The holding tank system 191 further includes a temperature sensor 199 to monitor the temperature of the cooled fermented mixture. The temperature sensor 199 is operatively connected to the control station 112 in such a manner that if the temperature of the cooled fermented mixture in the second holding tank system 190 rises above a certain predetermined temperature, the fermented mixture is removed from the holding tank 192 and cycled through the heat exchanger 160. The holding tank system 190 further includes an outlet pipe 100 located proximate the bottom 193 of the holding tank 192. The outlet pipe 200 penetrates the bottom 193. The outlet pipe 200 is operatively connected to a pneumatic valve 201 and a pump 202. If the temperature of the fermented mixtures rises above the desired optimum temperature range, the mixture may be recycled through the heat exchanger 160. The fermented mixture is pumped from the holding tank 192 through the outlet pipe 200 by the pump 202. The fermented mixture is pumped through a valve 203 located at the distal end of the outlet pipe 200. The valve 203 is operatively connected to a connecting pipe 205. The connecting pipe 205 is operatively connected to the valve 153 adjacent the heat exchanger 160. The fermented mixture is forced by the pump 202 through the valve 203, the connecting pipe 205 and the valve 153. The valve 153 is automatically adjusted by the control station 112 such that the fermented mixture is pumped through the valve 153 into the heat exchanger inlet pipe 154. The fermented mixture is then passed through the heat exchanger 160 where the fermented mixture is cooled to a desired temperature. Once the fermented mixture is cooled to the optimum holding temperature range, the cooled fermented mixture is pumped from the heat exchanger 160 through the outlet pipe 161. The valve 162 and the valve 164 are automatically adjusted such that the cooled fermented mixture is forced from the heat exchanger 160 through the outlet pipe 161, the valve 162, the connecting pipe 163, the valve 164, the inlet pipe 191 and returned to the holding tank 192. The holding tank system 190 can therefore operate in a cyclic manner.

At the appropriate time for preparing dough for bakery goods, the control station 112 automatically activates the second holding tank pneumatic valve 201 in the pump 202. The cooled fermented mixture is pumped from the holding tank 192 through the outlet pipe 200. The control station 112 also automatically activates the valve 203 such that the fermented mixture is prevented from entering the connecting pipe 205. The valve 203 is further connected to a supply pipe 207 such that the fermented mixture is pumped by the pump 202 from the outlet pipe 200 through the valve 203 and into the supply pipe 207. The supply pipe 207 may be operatively connected to a flow meter 209, which indicates the amount of fermented mixture passing from the second holding tank system 190 through the supply pipe 207. The supply pipe 207 is operatively connected to a conventional dough mixer such that the fermented mixture exits the supply pipe 207 into the dough mixer. The fermented mixture is then blended with additional flour and other optional ingredients to form the final dough product. In such a manner, the present invention may operate to supply one or more mixers simultaneously. The fermented mixtures may be stored in additional holding tank systems as required.

It is possible to attach additional fermentor systems to the present invention such that several batches of fermented mixtures may be processed simultaneously. In addition, alternative embodiments may contain additional holding tank systems which supply numerous dough mixers.

The above detailed description of the present invention is given for explanatory purposes. It will be apparent that those skilled in the art that numerous other changes and modifications can be made in the preferred embodiment of the invention described above without departing from the scope of the invention. Accordingly, the whole of the foregoing description is to be construed in an illustrative and not in a limitive sense, the scope of the invention being defined solely by the appended claims.

**Claims**

1. A process of manufacturing a bakery product from a flour yeast dough mixture comprising:

mixing together predetermined amounts of water, yeast, and ferment concentrate to form a slurry;

mixing a predetermined amount of flour and a second predetermined amount of water into said slurry and blending said slurry, flour and water together to form a mixture;

fermenting said mixture for a first predetermined period of time;

introducing a third predetermined amount of water and a second predetermined amount of flour to said fermented mixture and blending said water, flour and fermented mixture together to form a second mixture;

fermenting said second mixture for a second predetermined period of time;

introducing a final predetermined amount of water to said second fermented mixture such that said second fermented mixture and water are mixed;

adding a final predetermined amount of flour to said second fermented mixture and said water to form a dough product for baking.

2. The process of claim 1, wherein said fourth predetermined amount of water, introduced into said second fermented mixture, is cold.

3. The process of claim 1, further including the step of cooling said second fermented mixture to a predetermined temperature and thereafter adding said final predetermined amount of flour to form such dough product for baking.

4. The process of claim 3, further including the step of storing said cooled second fermented mixture for a period of time before mixing said cooled fermented mixture with said final predetermined amount of flour to form said dough product.

5. The process of claim 1, wherein said second predetermined amount of water is heated to a predetermined temperature prior to introduction into said slurry and said third predetermined amount of water is heated to a predetermined temperature prior to introduction into said fermented mixture.

6. The process of claim 1, in which the temperature of said fermented mixture and said second fermented mixture are maintained within predetermined upper and lower limits.

7. The process of claim 4, in which said steps of cooling said second fermented mixture and storing said cooled second fermented mixture are repeated for purposes of maintaining the temperature of said second fermeted mixture between predetermined upper and lower limits.

8. The process of claim 1, in which said first predetermined and said second predetermined amount of flour are less than 25%, by weight, of the total amount of flour necessary for producing said final dough product.

9. The process of claim 1, in which said first predetermined amount of water, said yeast and said ferment concentrate are mixed together for a period of time not exceeding 2 minutes, to form said slurry.

10. The process of claim 9, in which said slurry, said first predetermined amount of flour, and said second predetermined amount of water are blended together for a period of time not exceeding 2 minutes, to form said mixture.

11. The process of claim 10, in which said period of time said mixture ferments does not exceed 30 minutes.

12. The process of claim 11, in which said first fermented mixture, second predetermined amount of flour and said third predetermined amount of water are blended together for a period of time not exceeding 2 minutes, to form said second mixture.

13. The process of claim 12, in which said predetermined period of time said second mixture ferments does not exceed 45 minutes.

14. The process of claim 4, in which said predetermined period of time said second fermented mixture is stored is no greater than 48 hours.

15. The process of claim 3, in which said predetermined temperature ranges between 40-55°F.

16. The process of claim 4, in which said temperature of said second fermented mixture ranges between 34-44°F.

17. An improved fermentation apparatus for producing a bakery product from water, yeast, flour and a ferment concentrate comprising, in combination:

an ingriediator vessel having a mixing means for mixing a predetermined amount of such water, a predetermined amount of such yeast, and a predetermined amount of such ferment concentrate into a slurry;

means for supplying said slurry to a fermentor vessel said fementor also having a mixing means for blending said slurry with an additional predetermined amount of flour and water to form a mixture for fermentation; and

means for supplying said fermented mixture to a dough preparation means for blending said fermented mixture together with a second amount of additional flour to form said bakery product.

18. The apparatus of claim 17, further including at least two ingriediator vessels.

19. The apparatus of claim 17, further including a means for exchanging heat operatively connected to said fermenator vessel, wherein said means for exchanging heat receives said fermented mixture from said fermentor vessel and cools said fermented mixture to a predetermined temperature.

20. The apparatus of claim 19, further including a return means for returning said cooled fermented mixture to said fermentor vessel.

21. The apparatus of claim 19, further including a storage vessel in communication with said means for exchanging heat for receiving said cooled fermented mixture from said means for exchanging heat.

22. The apparatus of claim 21, wherein said storage vessel further includes means for agitating said cooled fermented mixture.

23. The apparatus of claim 21, further including a means for removing said stored cooled fermented mixture from said storage vessel, said removal means in communication with said dough preparation means for supplying said cooled fermented mixture to said dough preparation means.

24. The apparatus of claim 23, further including means for cycling said fermented mixture between said storage vessel and said means for exchanging heat whereby the temperature of said fermented mixture is maintained between predetermined upper and lower limits.

25. The apparatus of claim 21, wherein said storage vessel further includes a means for sensing the temperature of said stored cooled fermented mixture.

26. The apparatus of claim 21, further including at least two storage vessels.

27. The apparatus of claim 21, wherein said storage vessel includes an insulating means.

28. The apparatus of claim 17, further including automatic control means, said automatic control means determining by weight, the appropriate quantities of such yeast, water and ferment concentrate necessary to prepare said slurry.

29. The apparatus of claim 28, wherein said automatic control means further operates to regulate said means for supplying said slurry to said fermentor vessel.

30. The apparatus of claim 29, wherein said automatic control means further operates to regulate the quantities of such flour, and such predetermined additional amounts of water to be added to said slurry to form said mixture for fermentation.

31. The apparatus of claim 30, wherein said automatic control means further operates to regulate said means for supplying said fermented mixture to said dough preparation means.

32. The apparatus of claim 31, wherein said automatic control means further operates to regulate the quantity of such additional flour to be added to said fermented mixture to form said bakery product.

33. The apparatus of claim 19, further including automatic control means, said automatic control means determining, by temperature, said predetermined temperature of said fermented mixture cooled by said means for exchanging heat.

34. The apparatus of claim 20, wherein said automatic control means further operates to regulate said return means for returning said cooled fermented mixture to said fermentor vessel.

35. The apparatus of claim 21, further including automatic control means, said automatic control means determining by weight, the appropriate quantities of said cooled fermented mixture stored in said storage vessel.

36. The apparatus of claim 21, wherein said automatic control means further operates to regulate said means for agitating said cooled fermented mixture.

37. An improved fermentation apparatus for producing a bakery product from water, yeast, and ferment concentrate, comprising, in combination:

at least two ingrediator vessels, each of said ingrediator vessels having means for mixing a predetermined amount of such water, a predetermined amount of such yeast, and a predetermined amount of such ferment concentrate into a slurry;

means for supplying each of said slurries to at least two fermentor vessels, each of said fermentor vessels having a mixing means for blending said slurry with an additional predetermined amount of flour and water to form a mixture for fermentation; and

means for supplying each of said fermented mixtures to at least two dough preparation means for blending each of said fermented mixtures together with a second amount of additional flour to form dough products.

38. The apparatus of claim 37, further including at least two

means for exchanging heat operatively connected to each of said fermentor vessels, wherein said means for exchanging heat receives such fermented mixture from each of said fermented vessels and cools said fermented mixtures to predetermined temperatures.

39. The apparatus of claim 38, further including at least two storage vessels in communication with each of said means for exchanging heat for receiving said cooled fermented mixtures from each of said means for exchanging heat.

FIG. 1

Yeast, Water, Ferment Concentrate

FIG. 2

FIG. 3

0 180 727

European Patent
Office

**EUROPEAN SEARCH REPORT**

Application number

EP 85 11 0482

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | BAKERS DIGEST, vol. 55, no. 4, August 1981, pages 12-22, Chicago, Ill., US; W.E. DIBBLE: "Continuous mixing"<br><br>* Page 13, column 1, line 44 - page 22, column 1, line 12; figures 1-3 * | 1,3,4, 13-15, 17,19, 23,24, 28-33, 35 | A 21 D · 8/02<br>A 21 C  1/00 |
| A | FR-E- 20 554 (C. HEUDEBERT)<br>* Whole document * | 1,17 | |
| A | US-A-2 524 437 (G.F. GARNATZ) | | |
| A | US-A-2 953 460 (J.C. BAKER) | | |

TECHNICAL FIELDS
SEARCHED (Int. Cl.4)

A 21 D
A 21 C

The present search report has been drawn up for all claims

| Place of search<br>THE HAGUE | Date of completion of the search<br>22-01-1986 | Examiner<br>FRANKS N.M. |
|---|---|---|